# EUROPÄISCHE PATENTSCHRIFT

(11) **EP 3 947 001 B1**
(45) Veröffentlichungstag und Bekanntmachung des Hinweises auf die Patenterteilung: **28.02.2024**
(21) Anmeldenummer: 20713240.8
(22) Anmeldetag: 18.03.2020
(51) Int. Cl.: B60K 17/16, B60K 17/36

(54) **VERFAHREN ZUM STEUERN EINER FAHRDYNAMIKFUNKTION EINER ARBEITSMASCHINE**
METHOD FOR CONTROLLING A DRIVING DYNAMICS FUNCTION OF A WORKING MACHINE
PROCÉDÉ DE COMMANDE D'UNE FONCTION DE DYNAMIQUE DE CONDUITE D'UN ENGIN DE TRAVAIL

(30) Priorität: 26.03.2019 DE 102019204129
(43) Veröffentlichungstag der Anmeldung: 09.02.2022
(73) Patentinhaber: ZF Friedrichshafen AG, 88046 Friedrichshafen (DE)
(72) Erfinder: REBHOLZ, Wolfgang, 88605 Sauldorf-Krumbach (DE); LÄNGLE, Matthias, 88630 Pfullendorf (DE); SAUTER, Joachim, 88276 Berg (DE)
(74) Vertreter: ZF Friedrichshafen AG
(86) Internationale Anmeldenummer: PCT/EP2020/057425
(87) Internationale Veröffentlichungsnummer: WO 2020/193308

(56) Entgegenhaltungen:
- EP-A2- 1 468 860
- EP-B1- 1 340 644
- EP-B1- 3 237 246
- DE-A1-102010 040 714
- DE-A1-102011 113 620
- DE-A1-102016 203 113
- DE-A1-102017 204 354
- DE-B4-102006 031 062
- US-A- 5 574 643
- US-A1- 2008 255 735
- US-B2- 8 226 177

## Beschreibung

Die vorliegende Erfindung betrifft ein Verfahren zum Steuern einer Fahrdynamikfunktion einer Arbeitsmaschine. Eine Arbeitsmaschine beschreibt dabei ein Fahrzeug mit Einrichtungen zur Verrichtung von Arbeiten, wobei diese Einrichtungen fest oder lösbar mit der Arbeitsmaschine verbunden sein können. Insbesondere sind unter Arbeitsmaschinen Land- und/oder Baumaschinen zu verstehen. Insbesondere aber nicht ausschließlich kann es sich bei der Arbeitsmaschine um einen mehrachsigen Muldenkipper, beispielsweise einen sogenannten Dumper, handeln. Arbeitsmaschinen können eine angetriebene Vorder- und eine angetriebene Hinterachse mit jeweils einem Querdifferentialgetriebe zum Drehzahlausgleich zwischen den beiden Rädern einer Achse aufweisen. Zwischen Vorder- und Hinterachse kann ein Längsdifferentialgetriebe zum Drehzahlausgleich zwischen den beiden Achsen vorgesehen sein. Die einzelnen Räder der Arbeitsmaschine können einen Drehzahlsensor aufweisen, über den feststellbar ist, ob ein Rad Schlupf aufweist. Bei auftretendem Schlupf wenigstens eines Rads kann es erforderlich werden, eines oder mehrere Differentialgetriebe zu sperren.

Beispielsweise aus EP 2 949 507 A1 sind ein Fahrzeug und ein Verfahren zum Steuern eines Fahrzeugs bekannt, wobei das Fahrzeug über einen Entlademechanismus verfügt. Ferner weist das Fahrzeug ein Steuerungssystem auf, welches dazu eingerichtet ist, eine Bremsvorrichtung zu betätigen und ein Zwischenachsdifferential zu sperren, wenn eine Anforderung zur Materialentladung von dem Steuerungssystem erfasst wird und das Getriebe sich in einer Neutralstellung befindet. Darüber hinaus offenbart die US 5 574 643 A ein Verfahren zur Schlupfregelung durch Verwendung eines sperrbaren Differentialgetriebes.

Der vorliegenden Erfindung liegt die Aufgabe zugrunde, ein verbessertes Verfahren zum Steuern einer Fahrdynamikfunktion einer Arbeitsmaschine bereitzustellen. Ferner betrifft die vorliegende Erfindung eine Arbeitsmaschine mit einer Steuereinrichtung, welche das erfindungsgemäße Verfahren ausführt. Ferner betrifft die Erfindung ein Computerprogrammprodukt zum Durchführen des Verfahrens.

Die Aufgabe wird erfindungsgemäß mit dem Verfahren, der Arbeitsmaschine und dem Computerprogrammprodukt nach den Ansprüchen gelöst. Demnach ist das Verfahren dazu vorgesehen, eine Fahrdynamikfunktion einer Arbeitsmaschine mit wenigstens zwei Fahrzeugachsen zu steuern. Insbesondere handelt es sich bei den zwei Fahrzeugachsen jeweils um eine Vorder- und eine Hinterachse. Es sind jedoch auch Fahrzeuganordnungen mit mehr als zwei Fahrzeugachsen, insbesondere einer Vorderachse und zwei oder mehr Hinterachsen denkbar. An den Fahrzeugachsen sind Räder angeordnet. Verfahrensgemäß wird eine aktuelle Raddrehzahl wenigstens eines Rads erfasst und einer Steuereinrichtung für einen Abgleich mit einer zulässigen Raddrehzahl desselben Rads zugeführt. Aus der aktuellen Raddrehzahl und der zulässigen Raddrehzahl für die jeweilige Fahrsituation wird ein Radschlupf berechnet.

Von der Steuereinrichtung wird ein Signal zum Sperren wenigstens eines Differentialgetriebes ausgegeben, wenn der Radschlupf einen unzulässigen Wert annimmt. Für das betreffende gesperrte Differentialgetriebe wird periodisch ein Steuersignal zum Entsperren ausgegeben, und ein erneuter Abgleich der Raddrehzahlen vorgenommen. Soweit der Radschlupf des betreffenden Rads weiterhin einen unzulässigen Wert annimmt, wird nochmals ein Steuerungssignal zum Sperren des betreffenden Differentialgetriebes ausgegeben.

In dem zuvor genannten Zusammenhang ist unter einer aktuellen Raddrehzahl eine tatsächlich anliegende Raddrehzahl des betreffenden Rads zu verstehen. Bei der Steuereinrichtung kann es sich um ein elektrisches Steuergerät handeln. Exemplarisch, aber nicht ausschließlich kann es sich dabei um ein Fahrzeugsteuergerät (z. B. Fahrzeugführungsrechner), ein Motorsteuergerät, ein Getriebesteuergerät, ein Steuergerät für Fahrdynamikfunktionen oder ein in sonstiger Weise geeignetes Steuergerät handeln.

Eine zulässige Raddrehzahl eines Rads beschreibt dabei eine Drehzahl, welche aufgrund weiterer Fahrdynamikparameter der Arbeitsmaschine zu erwarten ist. Insbesondere ist darunter eine Raddrehzahl zu verstehen, welche idealerweise bei einer aktuellen Motordrehzahl unter Berücksichtigung verschiedener Übersetzungsverhältnisse von Getrieben und unter idealen Bedingungen (z. B. ohne Schlupf) an dem betreffenden Rad anliegen sollte. Auch die jeweilige Fahrsituation, insbesondere ein Durchfahren einer Kurve bzw. ein anliegender Lenkeinschlag, haben Einfluss auf die Raddrehzahl. Es kann in Bezug auf die zulässige Raddrehzahl auch eine Toleranz hinsichtlich eines Über-/Unterschreitens der zulässigen Raddrehzahl vorgesehen werden. Dementsprechend ist unter einem unzulässigen Wert der Raddrehzahl ein Wert zu verstehen, welcher entweder von der zulässigen Raddrehzahl abweicht oder außerhalb des betreffenden Toleranzbereichs liegt.

Ein Differentialgetriebe beschreibt in diesem Zusammenhang ein Ausgleichsgetriebe, welches insbesondere unterschiedliche Drehzahlen zwischen zwei Wellen ausgleichen kann. Dabei wird im Wesentlichen zwischen einem sogenannten Querdifferential und einem Längsdifferential unterschieden. Querdifferentiale ermöglichen einen Drehzahlausgleich zwischen Rädern einer Achse, insbesondere beim Durchfahren einer Kurve. Hingegen kann durch Längsdifferentiale ein Drehzahlausgleich zwischen verschiedenen Fahrzeugachsen erfolgen. In Bezug auf die Differentialgetriebe ist unter dem Sperren eines solchen Differentialgetriebes zu verstehen, dass die zuvor beschriebene Ausgleichsbewegung bzw. der Drehzahlausgleich reduziert oder vollständig gesperrt wird. Bei einem vollständig gesperrten Differentialgetriebe drehen somit die beiden Achsen mit der gleichen Drehzahl. In Analogie dazu ist unter einem Entsperren eines Differentialgetriebes zu verstehen, dass entweder ein vollständig gesperrtes Differentialgetriebe zumindest teilweise oder vollumfänglich geöffnet wird, wodurch die Ausgleichsbewegung bzw. der Drehzahlausgleich teilweise oder vollumfänglich realisiert wird.

Unter dem periodischen Ausgeben eines Steuersignals zum Entsperren des gesperrten Differentialgetriebes ist zu verstehen, dass wiederkehrend, insbesondere in gleichen zeitlichen Abständen, ein ebensolches Steuersignal ausgegeben wird. Dabei kann eine korrespondierende Periodenlänge von verschiedenen Einflussfaktoren abhängig sein und somit auch variieren.

Erfindungsgemäß wird mit Erfassungsmitteln eine Wegstrecke erfasst, entlang welcher der Wert des Radschlupfs des wenigstens einen Rads einen unzulässigen Wert aufwies. Bei den Erfassungsmitteln kann es sich beispielsweise um Drehzahlsensoren der Räder (an den Rädern oder an der jeweiligen Achse) handeln, welche eine zulässige Raddrehzahl bzw. einen zulässigen Radschlupf aufweisen. Ferner kann es sich bei den Erfassungsmitteln um wenigstens einen GPS-Sensor handeln, welcher ein Positionssignal empfängt und der Steuereinrichtung zuführt. Alternativ oder ergänzend kann es sich bei den Erfassungsmitteln auch um einen oder mehrere Beschleunigungssensoren, Distanzsensoren oder Lasersensoren handeln. Insbesondere können die Erfassungsmittel auch in Form von optischen Sensoren zur Geschwindigkeitserfassung ausgebildet sein, in vorteilhafter Weise sind diese dabei auf die Wegstrecke bzw. auf den Untergrund unter der Arbeitsmaschine gerichtet. Bei der Wegstrecke handelt es sich dementsprechend um einen zurückgelegten Fahrweg bzw. um eine Länge einer Strecke, welche zurückgelegt wurde. Erfindungsgemäß wird somit eine Wegstrecke erfasst, welche aufgrund ihrer Beschaffenheit zu einem unzulässigen Wert des Radschlupfs führte. Insbesondere kann ein unzulässiger Wert des Radschlupfs durch eine verminderte Traktion hervorgerufen werden, welche ihre Ursache in der Beschaffenheit der Wegstrecke haben kann. So können insbesondere Umwelteinflüsse die Traktion einer Wegstrecke herabsetzen. In diesem Zusammenhang wird auf unterschiedliche Bodentypen/Untergründe, Schnee, Eis, Niederschlag (insbesondere dadurch hervorgerufene Schlammbildung) verwiesen.

In einer vorteilhaften Weiterbildung des erfindungsgemäßen Verfahrens wird neben einer Wegstrecke auch deren Position ermittelt, wobei prädiktiv vor einem Befahren der jeweiligen Wegstrecke durch ein weiteres Rad für wenigstens ein weiteres Differentialgetriebe ein Steuersignal zum Sperren ausgegeben wird.

Bei dem Ermitteln der Position kann vorliegend auf GPS-Daten zurückgegriffen werden. Alternativ kann auch eine Information bezüglich eines Achsabstands verwendet werden, um zu ermitteln, wann beispielsweise ein Rad einer zweiten Fahrzeugachse einen Bereich mit verminderter Traktion durchfahren wird, wenn dieser durch einen unzulässigen Radschlupf eines Rads einer ersten Fahrzeugachse identifiziert wurde. Bei dem wenigstens einen weiteren Differentialgetriebe kann es sich insbesondere um ein Querdifferentialgetriebe einer zweiten und/oder dritten Fahrzeugachse handeln. Alternativ kann auch ein Längsdifferentialgetriebe hierunter verstanden werden.

Unter dem Ausdruck prädiktiv ist in diesem Zusammenhang somit zu verstehen, dass vorausschauend, also vor dem tatsächlichen Auftreten eines möglichen Traktionsverlustes, bereits ein Sperren eines weiteren Differentialgetriebes initiiert wird. Hierdurch kann die Fahrdynamik der Arbeitsmaschine weiter verbessert werden.

Weiter vorteilhaft wird periodisch für das wenigstens eine weitere Differentialgetriebe ein Steuersignal zum Entsperren ausgegeben und es erfolgt ein erneuter Abgleich der Raddrehzahlen. Dabei wird nochmals ein Steuersignal zum Sperren des betreffenden Differentialgetriebes ausgegeben, wenn der Radschlupf bzw. die Raddrehzahl des betreffenden Rads weiterhin einen unzulässigen Wert annimmt.

Gemäß einer vorteilhaften Weiterbildung des erfindungsgemäßen Verfahrens wird ein aus einer Periodenlänge resultierender Wert einer Schließdauer des wenigstens einen gesperrten Differentialgetriebes unter Berücksichtigung weiterer Fahrdynamikparameter angepasst. Insbesondere kann es sich bei den genannten Fahrdynamikparametern um eine Information über eine Kurvenfahrt der Arbeitsmaschine handeln. Zur besseren Manövrierbarkeit kann es daher erforderlich sein, bei einer Kurvenfahrt ein gesperrtes Differentialgetriebe zumindest teilweise zu entsperren. Ferner kann auch eine Information zugeführt werden, welche eine Häufung von Wegstrecken mit verminderter Traktion bzw. unzulässigen Radschlupfwerten repräsentiert. Dementsprechend kann zum Zwecke der Verschleißminderung die Schließdauer bzw. die entsprechende Periodenlänge erhöht werden, wenn über einen längeren Zeitraum bzw. mehrere Perioden eine (durchgehende) Wegstrecke mit verminderter Traktion erkannt wurde. Im Gegenzug dazu kann eine Periodenlänge verkürzt werden, wenn nur sehr kurze Wegstrecken mit einer verminderten Traktion bzw. einem unzulässigen Radschlupf identifiziert wurden.

Vorteilhaft wird vorrangig für dasjenige Differentialgetriebe ein Steuersignal zum Entsperren ausgegeben und erneut eine Ermittlung des Radschlupfes durchgeführt, bei dessen Entsperren mit hoher Wahrscheinlichkeit ein für den Radschlupf zulässiger Wert zu erwarten ist. Soweit der Radschlupf auch hier weiterhin einen unzulässigen Wert aufweist, wird nochmals ein Steuersignal zum Sperren des betreffenden Differentialgetriebes ausgegeben. Mit anderen Worten kann eine Priorisierung bzw. Gewichtung vorgenommen werden, welches Rad wahrscheinlich als nächstes wieder einen Bereich mit hoher Traktion befahren wird. Hierfür sind insbesondere Informationen über die Länge der Wegstrecke bzw. die Position der jeweiligen Wegstrecke mit geringer und hoher Traktion hilfreich.

Soweit bei dem zuvor vorrangig entsperrten Differentialgetriebe weiterhin der Radschlupf einen unzulässigen Wert aufweist, wird die periodische Ausgabe des Steuersignals zum Entsperren der verbleibenden Differentialgetriebe vorteilhaft ausgesetzt. Mit anderen Worten wird die Periodenlänge für die Ausgabe des Steuersignals zum Entsperren der verbleibenden Differentialgetriebe erhöht.

Vorteilhaft wird von den Erfassungsmitteln eine Raddrehzahl von wenigstens einem weiteren Rad verwendet. Idealerweise handelt es sich dabei um einen zulässigen Wert der Raddrehzahl. Ferner können aber auch Raddrehzahlwerte mehrerer Räder verwendet werden. Hierdurch kann auch eine Plausibilisierung von Raddrehzahlwerten verschiedener Räder erfolgen.

In einer weiter vorteilhaften Weiterbildung des erfindungsgemäßen Verfahrens wird von den Erfassungsmitteln ein Signal zur Bestimmung von Positionsdaten verwendet.

Gemäß einem weiteren Aspekt der vorliegenden Erfindung umfasst diese eine Arbeitsmaschine, welche einen Antriebsstrang mit einem Antriebselement, wenigstens einem sperrbaren Differentialgetriebe, wenigstens zwei Fahrzeugachsen und wenigstens ein an jeder Achse angebrachtes Rad aufweist. Ferner umfasst die Arbeitsmaschine in zuvor genannter Art und Weise beschriebene Erfassungsmittel und eine Steuereinrichtung, welche dazu eingerichtet ist, das erfindungsgemäße Verfahren auszuführen. Idealerweise sind jeder Fahrzeugachse zwei Räder, eines auf einer linken Fahrzeugseite und eines auf einer rechten Fahrzeugseite, zugeordnet. Es sind auch Anordnungen mit einer sogenannten Zwillingsbereifung oder einer Doppelachse denkbar.

Weiter umfasst die vorliegende Erfindung ein Computerprogrammprodukt mit einem Programmcode zum Durchführen des Verfahrens, wenn der Programmcode auf einem Computer ausgeführt wird. Bei dem Computer kann es sich beispielsweise um die Steuereinrichtung handeln. Alternativ ist es auch denkbar, dass der Computer dezentral zu der Arbeitsmaschine angeordnet ist. Hierunter wäre insbesondere zu verstehen, dass die Steuereinrichtung der Arbeitsmaschine und der Computer beispielsweise über eine drahtlose Verbindung miteinander interagieren und Daten austauschen. Dementsprechend könnten die Signalinformationen zum Sperren bzw. Entsperren von dem Computer an die Steuereinrichtung der Arbeitsmaschine gesendet werden.

Die Erfindung wird anhand der nachfolgenden Figuren näher beschrieben. Es zeigen:
- Fig. 1:: eine schematische Darstellung eines ersten Antriebsstrangs einer Arbeitsmaschine;
- Fig. 2:: eine schematische Darstellung eines zweiten Antriebsstrangs einer Arbeitsmaschine;
- Fig. 3:: eine schematische Darstellung eines dritten Antriebsstrangs einer Arbeitsmaschine;
- Fig. 4:: eine schematische Darstellung eines vierten Antriebsstrangs einer Arbeitsmaschine;
- Fig. 5:: ein vereinfachtes Ablaufdiagramm des erfindungsgemäßen Verfahrens.

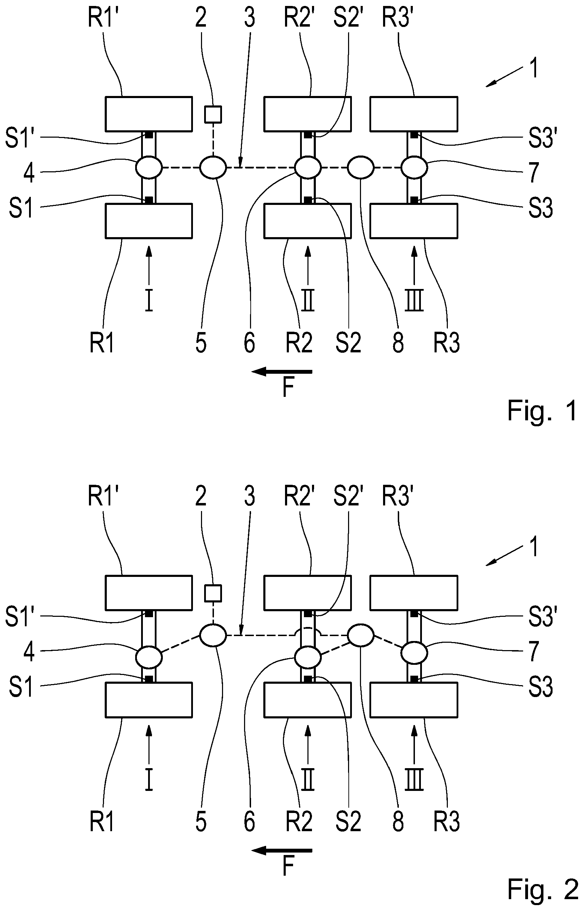

Fig. 1 zeigt in einer stark vereinfachten schematischen Darstellung einen Antriebsstrang 1 einer Arbeitsmaschine. Vorliegend weist der Antriebsstrang 1 eine erste, zweite und dritte Fahrzeugachse I, II, III auf, wobei die erste Fahrzeugachse I als Vorderachse und die zweite und dritte Fahrzeugachse II, III als Hinterachse ausgeführt sind. Der ersten Fahrzeugachse I sind zwei Räder R1, R1' zugeordnet, der zweiten Fahrzeugachse II sind zwei Räder R2, R2' zugeordnet und der dritten Fahrzeugachse III sind zwei Räder R3, R3' zugeordnet. Ferner sind der ersten Fahrzeugachse I zwei Erfassungsmittel S1, S1', der zweiten Fahrzeugachse II zwei Erfassungsmittel S2, S2' und der dritten Fahrzeugachse III ebenfalls zwei Erfassungsmittel S3, S3' zugeordnet. Bei den Erfassungsmitteln S1, S1', S2, S2', S3, S3' handelt es sich vorliegend um Drehzahlsensoren.

Die erste Fahrzeugachse I verfügt ferner über ein Differentialgetriebe 4, die zweite Fahrzeugachse II über ein Differentialgetriebe 6 und die dritte Fahrzeugachse III über ein Differentialgetriebe 7. Die Differentialgetriebe 4, 6, 7 sind vorliegend als Querdifferentialgetriebe ausgeführt. Sie ermöglichen somit einen Drehzahlausgleich zwischen den Rädern R1, R1', R2, R2', R3, R3' der jeweiligen Fahrzeugachsen I, II, III.

Zwischen der ersten und zweiten Fahrzeugachse I, II ist ferner ein Differentialgetriebe 5 angeordnet und zwischen der zweiten und dritten Fahrzeugachse II, III ist ein Differentialgetriebe 8 angeordnet. Die beiden Differentialgetriebe 5, 8 sind vorliegend als Längsdifferentialgetriebe ausgeführt und ermöglichen einen Drehzahlausgleich zwischen der ersten und zweiten Fahrzeugachse I, II bzw. der zweiten und dritten Fahrzeugachse II, III.

Ein Antriebselement 2 stellt die erforderliche Antriebsleistung bereit. Das Antriebselement 2 kann insbesondere als Verbrennungskraftmaschine ausgeführt sein. Es ist jedoch auch denkbar, dass es sich hierbei um einen Elektromotor handelt. Mittels Strichlinien sind Übertragungsvorrichtungen 3 dargestellt. Hierbei handelt es sich insbesondere um Antriebswellen, welche zwischen den jeweiligen Differentialgetrieben 4, 5, 6, 7, 8 bzw. zwischen dem Differentialgetriebe 5 und dem Antriebselement 2 vorgesehen sind. Durch die Übertragungsvorrichtungen 3 erfolgt die Übertragung der Drehzahl bzw. des Drehmoments. Soweit sich die Arbeitsmaschine bzw. deren Antriebsstrang 1 in einer vorwärtigen Fahrtrichtung F bewegt, befahren die Räder R1, R1' der ersten Fahrzeugachse I eine Wegstrecke, während die Räder R2, R2' der zweiten Fahrzeugachse II den gleichen Streckenabschnitt zeitlich versetzt befahren. In gleicher Weise befahren die Räder R3, R3' der dritten Fahrzeugachse III zeitlich weiter versetzt ebendiesen Streckenabschnitt. Wird nun durch eines der Erfassungsmittel S1, S1' der ersten Fahrzeugachse I eine unzulässige Raddrehzahl eines der Räder R1, R1' identifiziert, so wird durch die hier nicht dargestellte Steuereinrichtung ein Signal zum Sperren des Differentialgetriebes 4 ausgegeben. In gleicher Weise wird verfahren, wenn für eines der Räder R2, R2' der zweiten Fahrzeugachse II oder für eines der Räder R3, R3' der dritten Fahrzeugachse III ein unzulässiger Wert der Raddrehzahl erfasst wird. Dementsprechend werden dann das Differentialgetriebe 6 und/oder das Differentialgetriebe 7 gesperrt bzw. ein Signal zum Sperren ebendieser Differentialgetriebe 6, 7 wird ausgegeben.

Soweit für beide Räder R1, R1', R2, R2', R3, R3' einer Fahrzeugachse I, II, III gleichzeitig ein unzulässiger Wert der Raddrehzahl erfasst wird, wird ein Signal zum Sperren des Differentialgetriebes 5 und/oder des Differentialgetriebes 8 ausgegeben und ebendiese Differentialgetriebe 5, 8 werden gesperrt.

Da die Abstände zwischen den Fahrzeugachsen I, II, III unveränderlich sind, kann bei Vorliegen einer unzulässigen Raddrehzahl an einer der Fahrzeugachsen I, II, III auf einen Traktionsverlust geschlossen und berechnet werden, wann eine der nachfolgenden Fahrzeugachsen II, III genau diesen Bereich befahren werden. Dementsprechend kann zum Erreichen bzw. kurz zuvor bereits ein Signal zum Sperren des Differentialgetriebes 6 oder des Differentialgetriebes 7 erfolgen.

Ebenfalls nicht gezeigt sind weitere Erfassungsmittel, welche beispielsweise als GPS-Sensor ausgeführt sind. Diese können zusätzlich zu den vorhandenen Erfassungsmitteln S1, S1', S2, S2', S3, S3' vorgesehen werden.

In der hier gezeigten Ausführungsform des Antriebsstrangs 1 sind die Differentialgetriebe 4, 5, 6, 7, 8 mittig angeordnet. Dies bedeutet, dass sie den gleichen Abstand zur linken und zur rechten Fahrzeugseite der Arbeitsmaschine aufweisen. Ferner ist die zweite Fahrzeugachse II als sogenannte Durchtriebsachse ausgeführt. Dies bedeutet, dass das Differentialgetriebe 6 neben dem Drehzahlausgleich an der zweiten Fahrzeugachse II auch einen Durchtrieb zum Differentialgetriebe 8 bzw. dadurch auch zur dritten Fahrzeugachse III gewährleistet.

Fig. 2 zeigt in einer schematischen Darstellung einen zweiten Antriebsstrang 1. Dieser unterscheidet sich zu dem in Fig. 1 beschriebenen Antriebsstrang 1 darin, dass die Differentialgetriebe 4, 5, 6, 7, 8 nun nicht mehr mittig angeordnet sind. Vielmehr sind die Differentialgetriebe 4, 6, 7 in Bezug auf die Fahrtrichtung F mit dem gleichen Abstand parallel versetzt zu den Differentialgetrieben 5, 8 angeordnet. Ferner ist nun das Differentialgetriebe 5 mit dem Differentialgetriebe 8 über die Übertragungsvorrichtung 3 verbunden, während das Differentialgetriebe 8 über Übertragungsvorrichtungen 3 mit dem Differentialgetriebe 6 und dem Differentialgetriebe 7 verbunden ist. Hieraus folgt, dass die zweite Fahrzeugachse II nun nicht mehr als Durchtriebsachse ausgeführt ist. Das erfindungsgemäße Verfahren kann mit dem vorliegenden Antriebsstrang 1 jedoch in gleicher Weise ausgeführt werden.

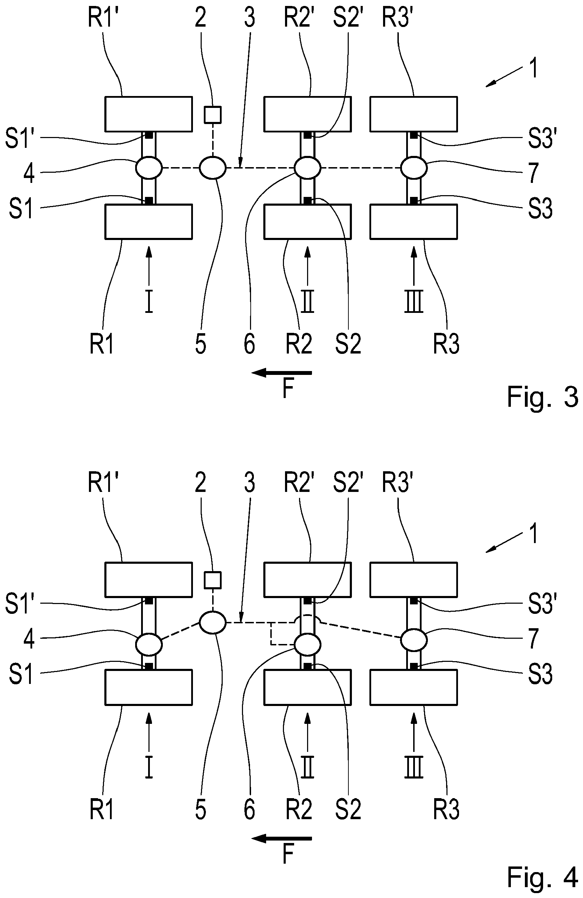

Fig. 3 zeigt in einer schematischen Darstellung eine alternative Ausführung und somit einen dritten Antriebsstrang 1. Dieser unterscheidet sich von der in Fig. 1 beschriebenen Ausführungsform darin, dass auf das Differentialgetriebe 8 zwischen der zweiten und dritten Fahrzeugachse II, III verzichtet wird. Alle weiteren Elemente des Antriebsstrangs 1 und deren funktionale Einbindung stimmen mit der in Fig. 1 beschriebenen Anordnung und Funktionsweise überein.

In Fig. 4 ist eine Abwandlung des in Fig. 2 gezeigten Antriebsstrangs 1 schematisch dargestellt. Im Gegensatz zu der in Fig. 2 gezeigten Ausführungsform weist der hier dargestellte Antriebsstrang 1 eine direkte Verbindung mittels Übertragungsvorrichtungen 3 zwischen dem Differentialgetriebe 6 und dem Differentialgetriebe 5 bzw. auch dem Differentialgetriebe 7 und dem Differentialgetriebe 5 auf. In allen weiteren Merkmalen stimmen die in Fig. 2 und in Fig. 4 gezeigten Ausführungsformen des Antriebsstrangs 1 überein.

Allgemein ist anzumerken, dass die Räder R1, R2, R3 jeweils auf einer linken Fahrzeugseite der Arbeitsmaschine und die Räder R1', R2', R3' auf einer rechten Fahrzeugseite der Arbeitsmaschine angeordnet sind.

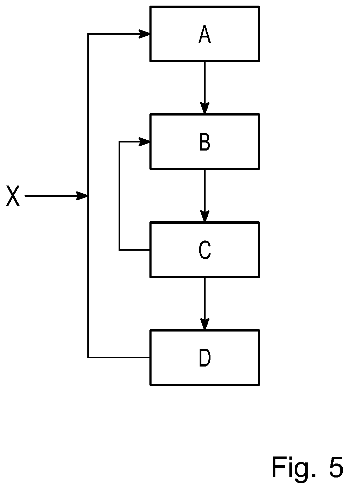

Fig. 5 verdeutlicht stark vereinfacht anhand eines Ablaufdiagramms das erfindungsgemäße Verfahren. In einem ersten Schritt A wird dabei ein Signal zum Entsperren des jeweiligen Differentialgetriebes 4, 5, 6, 7, 8 ausgegeben. Dieses Signal kann unabhängig von einem vorherigen Programm oder Verfahrensablauf ausgegeben werden, um sicherzustellen, dass sich alle Differentialgetriebe 4, 5, 6, 7, 8 in einem entsperrten bzw. geöffneten Zustand befinden. Vorteilhaft kann der erste Verfahrensschritt A auch bei einem Fahrzeugneustart durchgeführt werden. Alternativ ist auch denkbar, dass der erste Verfahrensschritt A bei einem Fahrzeugneustart unterbleibt und sich alle Differentialgetriebe 4, 5, 6, 7, 8 in ihrem letztmals eingestellten Betätigungszustand befinden.

In einem zweiten Verfahrensschritt B wird eine Drehzahl wenigstens eines Rads R1, R1', R2, R2', R3, R3' erfasst. Dies erfolgt insbesondere anhand der Erfassungsmittel S1, S1', S2, S2', S3, S3'.

Nachfolgend wird in einem dritten Schritt C ein Abgleich der erfassten Drehzahl mit einer zulässigen Drehzahl vorgenommen. Soweit die erfasste Drehzahl der zulässigen Drehzahl entspricht bzw. unter Berücksichtigung eines Toleranzbereichs der zulässigen Drehzahl entspricht, ist eine Rückkopplung vom dritten Verfahrensschritt C zum zweiten Verfahrensschritt B vorgesehen. Insbesondere soll hierdurch erreicht werden, dass periodisch die entsprechende Raddrehzahl erneut erfasst und ein Abgleich durchgeführt wird. Dabei kann das Zeitintervall für die erneute Durchführung der Erfassung und des Abgleichs der Raddrehzahl, also die Periodenlänge, einen fixen Wert annehmen, oder anhand weiterer Parameter variieren.

Soweit in dem dritten Verfahrensschritt C festgestellt wird, dass die erfasste Drehzahl einen unzulässigen Drehzahlwert angenommen bzw. erreicht hat, wird in einem vierten Verfahrensschritt D ein Signal zum Sperren des betreffenden Differentialgetriebes 4, 5, 6, 7, 8 erzeugt und von einer hier nicht gezeigten Steuereinrichtung ausgegeben. Es ist ferner eine Rückkopplung von dem vierten Verfahrensschritt D zu dem ersten Verfahrensschritt A vorgesehen. Durch die Rückkopplung zwischen dem vierten und ersten Verfahrensschritt D, A wird sichergestellt, dass das betreffende Differentialgetriebe 4, 5, 6, 7, 8 nur so lange in einem gesperrten Zustand verbleibt, wie es für einen optimalen Fahrbetrieb erforderlich ist.

Diese Rückkopplung erfolgt ebenfalls periodisch. Dies bedeutet gleichzeitig, dass der mit dem vierten Verfahrensschritt D erzeugte Sperrzustand des betreffenden Differentialgetriebes 4, 5, 6, 7, 8 über einen gewissen Zeitraum beibehalten wird, bevor ein Signal zum Entsperren des jeweiligen Differentialgetriebes 4, 5, 6, 7, 8 durch den ersten Verfahrensschritt A ausgegeben wird. Die Periodenlänge, nach welcher von dem vierten Verfahrensschritt D in den ersten Verfahrensschritt A gewechselt wird, kann dabei von Fahrdynamikparametern X beeinflusst werden. So können solche Fahrdynamikparameter X insbesondere dazu beitragen, dass eine vorgesehene Periodenlänge verkürzt wird. Dies ist insbesondere dann gegeben, wenn die Arbeitsmaschine eine Kurvenfahrt beginnt bzw. ein Grenzwert für einen Kurvenradius erreicht oder überschritten wird, bei welchem ein gesperrtes Differentialgetriebe 4, 5, 6, 7, 8 einen nachteiligen Einfluss auf die Fahrdynamik der Arbeitsmaschine nimmt.

Der in Fig. 5 beschriebene Ablauf des erfindungsgemäßen Verfahrens bildet das Erfassen einer Raddrehzahl und bei Vorliegen einer unzulässigen Raddrehzahl das Sperren eines betreffenden Differentialgetriebes 4, 5, 6, 7, 8 für lediglich ein Rad R1, R1', R2, R2', R3, R3' der Arbeitsmaschine ab. Dementsprechend ist der in Fig. 5 gezeigte Ablauf beliebig skalierbar und auf weitere Räder R1, R1', R2, R2', R3, R3' der Arbeitsmaschine erweiterbar. Insbesondere ist der gezeigte Verfahrensablauf dahingehend erweiterbar, dass bei mehreren gesperrten Differentialgetrieben 4, 5, 6, 7, 8 eine Gewichtung vorgenommen werden kann, für welches dieser Differentialgetriebe 4, 5, 6, 7, 8 vorrangig ein Signal zum Entsperren ausgegeben werden soll. Dementsprechend ist auch diese Information als Beeinflussen der Fahrdynamikparameter X hinsichtlich der Periodenlänge der Rückkopplung von dem vierten Verfahrensschritt D zu dem ersten Verfahrensschritt A denkbar.

### Bezugszeichen

- 1: Antriebsstrang
- 2: Antriebselement
- 3: Übertragungsvorrichtung
- 4: Differentialgetriebe
- 5: Differentialgetriebe
- 6: Differentialgetriebe
- 7: Differentialgetriebe
- 8: Differentialgetriebe
- I, II, III: Fahrzeugachse
- R1, R1': Rad
- R2, R2': Rad
- R3, R3': Rad
- S1, S1': Erfassungsmittel
- S2, S2': Erfassungsmittel
- S3, S3': Erfassungsmittel

- A, B, C, D: Verfahrensschritt
- X: Fahrdynamikparameter

## Patentansprüche

1. Verfahren zum Steuern einer Fahrdynamikfunktion einer Arbeitsmaschine mit wenigstens zwei Fahrzeugachsen (I, II, III), wobei eine aktuelle Raddrehzahl wenigstens eines Rads (R1, R1', R2, R2', R3, R3') erfasst und in einer Steuereinrichtung für einen Abgleich mit einer zulässigen Raddrehzahl desselben Rads (R1, R1', R2, R2', R3, R3') zugeführt und daraus ein Radschlupf berechnet wird, wobei von der Steuereinrichtung ein Steuersignal zum Sperren wenigstens eines Differentialgetriebes (4, 5, 6, 7, 8) ausgegeben wird, wenn der Radschlupf einen unzulässigen Wert annimmt, wobei periodisch für das betreffende Differentialgetriebe (4, 5, 6, 7, 8) ein Steuersignal zum Entsperren ausgegeben und ein erneuter Abgleich der Raddrehzahlen vorgenommen wird, wobei nochmals ein Steuersignal zum Sperren des betreffenden Differentialgetriebes (4, 5, 6, 7, 8) ausgegeben wird, wenn der Radschlupf weiterhin einen unzulässigen Wert annimmt, **dadurch gekennzeichnet, dass** anhand von Erfassungsmitteln (S1, S1', S2, S2', S3, S3') eine Wegstrecke erfasst wird, entlang welcher der Wert des Radschlupfs des wenigstens einen Rads (R1, R1', R2, R2', R3, R3') einen unzulässigen Wert aufwies.

2. Verfahren nach Anspruch 1, **dadurch gekennzeichnet, dass** neben der Wegstrecke auch deren Position ermittelt wird, wobei prädiktiv vor einem Befahren der Wegstrecke durch ein weiteres Rad (R1, R1', R2, R2', R3, R3') für wenigstens ein weiteres Differentialgetriebe (4, 5, 6, 7, 8) ein Steuersignal zum Sperren des jeweiligen Differentialgetriebes (4, 5, 6, 7, 8) ausgegeben wird.

3. Verfahren nach Anspruch 2, **dadurch gekennzeichnet, dass** periodisch für das wenigstens eine weitere Differentialgetriebe (4, 5, 6, 7, 8) ein Steuersignal zum Entsperren ausgegeben und ein erneuter Abgleich der Raddrehzahlen vorgenommen wird, wobei nochmals ein Steuersignal zum Sperren des betreffenden Differentialgetriebes (4, 5, 6, 7, 8) ausgegeben wird, wenn der Radschlupf weiterhin einen unzulässigen Wert annimmt.

4. Verfahren nach Anspruch 3, **dadurch gekennzeichnet, dass** ein aus einer Periodenlänge resultierender Wert einer Schließdauer des wenigstens einen gesperrten Differentialgetriebes (4, 5, 6, 7, 8) unter Berücksichtigung weiterer Fahrdynamikparameter (X) angepasst wird.

5. Verfahren nach einem der Ansprüche 2 bis 4, **dadurch gekennzeichnet, dass** vorrangig für dasjenige Differentialgetriebe (4, 5, 6, 7, 8) ein Steuersignal zum Entsperren ausgegeben und eine Ermittlung des Radschlupfes durchgeführt wird, bei dessen Entsperren mit hoher Wahrscheinlichkeit ein für den Radschlupf zulässiger Wert zu erwarten ist, wobei nochmals ein Steuersignal zum Entsperren des betreffenden Differentialgetriebes (4, 5, 6, 7, 8) ausgegeben wird, wenn der Radschlupf weiterhin einen unzulässigen Wert aufweist.

6. Verfahren nach Anspruch 5, **dadurch gekennzeichnet, dass** die periodische Ausgabe des Steuersignals zum Entsperren der verbleibenden Differentialgetriebe (4, 5, 6, 7, 8) ausgesetzt wird, wenn zuvor für den Radschlupf ein unzulässiger Wert ermittelt wurde.

7. Verfahren nach einem der vorherigen Ansprüche, **dadurch gekennzeichnet, dass** von den Erfassungsmitteln (S1, S1', S2, S2', S3, S3') eine Raddrehzahl von wenigstens einem weiteren Rad (R1, R1', R2, R2', R3, R3') verwendet wird.

8. Verfahren nach einem der vorherigen Ansprüche, **dadurch gekennzeichnet, dass** von den Erfassungsmitteln (S1, S1', S2, S2', S3, S3') ein Signal zur Bestimmung von Positionsdaten verwendet wird.

9. Arbeitsmaschine, aufweisend
- einen Antriebsstrang (1) mit einem Antriebselement (2), wenigstens einem sperrbaren Differentialgetriebe (4, 5, 6, 7, 8), wenigstens zwei Fahrzeugachsen (I, II, III) und wenigstens einem an jeder Fahrzeugachse (I, II, III) angebrachten Rad (R1, R1', R2, R2', R3, R3');
- Erfassungsmittel (S1, S1', S2, S2', S3, S3');
- eine Steuereinrichtung, welche dazu eingerichtet ist, das Verfahren nach einem der vorherigen Ansprüche auszuführen.

10. Computerprogrammprodukt mit Programmcode zum Durchführen des Verfahrens nach einem der Ansprüche 1 bis 8, wenn der Programmcode auf einem Computer ausgeführt wird.

## Claims

1. Method for controlling a driving dynamics function of a working machine with at least two vehicle axles (I, II, III), wherein a current wheel speed of at least one wheel (R1, R1', R2, R2', R3, R3') is detected and is fed to a control device for a comparison with a permissible wheel speed of the same wheel (R1, R1', R2, R2', R3, R3') and a wheel slip is calculated from it, wherein a control signal for blocking at least one differential gear mechanism (4, 5, 6, 7, 8) is output by the control device if the wheel slip assumes an impermissible value, wherein a control signal for unblocking is output and a renewed comparison of the wheel speeds is performed periodically for the relevant differential gear mechanism (4, 5, 6, 7, 8), wherein a control signal for blocking the relevant differential gear mechanism (4, 5, 6, 7, 8) is output once more if the wheel slip continues to assume an impermissible value, **characterized in that** a route along which the value of the wheel slip of the at least one wheel (R1, R1', R2, R2', R3, R3') had an impermissible value is detected by using detection means (S1, S1', S2, S2', S3, S3').

2. Method according to Claim 1, **characterized in that**, besides the route, its position is also determined, wherein a control signal for locking the respective differential gear mechanism (4, 5, 6, 7, 8) is output predictively for at least one further differential gear mechanism (4, 5, 6, 7, 8) before the route is passed over by a further wheel (R1, R1', R2, R2', R3, R3').

3. Method according to Claim 2, **characterized in that** a control signal for unlocking is output periodically for the at least one further differential gear mechanism (4, 5, 6, 7, 8) and a renewed comparison of the wheel speeds is performed, wherein a control signal for blocking the relevant differential gear mechanism (4, 5, 6, 7, 8) is output once more if the wheel slip continues to assume an impermissible value.

4. Method according to Claim 3, **characterized in that** a value of a closing duration of the at least one locked differential gear mechanism (4, 5, 6, 7, 8) resulting from the length of a period is adapted while taking into account further driving dynamics parameters (X).

5. Method according to one of Claims 2 to 4, **characterized in that**, as a priority, a control signal for unlocking is output and a determination of the wheel slip is carried out for that differential gear mechanism (4, 5, 6, 7, 8) from the unlocking of which a value permissible for the wheel slip can be expected with high probability, wherein a control signal for blocking the relevant differential gear mechanism (4, 5, 6, 7, 8) is output once more if the wheel slip continues to assume an impermissible value.

6. Method according to Claim 5, **characterized in that** the periodic output of the control signal for unlocking the remaining differential gear mechanisms (4, 5, 6, 7, 8) is suspended if an impermissible value has previously been determined for the wheel slip.

7. Method according to one of the preceding claims, **characterized in that** a wheel speed of at least one further wheel (R1, R1', R2, R2', R3, R3') is used by the detection means (S1, S1', S2, S2', S3, S3').

8. Method according to one of the preceding claims, **characterized in that** a signal for determining position data is used by the detection means (S1, S1', S2, S2', S3, S3').

9. Working machine, comprising:
a drive train (1) with a drive element (2),
at least one lockable differential gear mechanism (4, 5, 6, 7, 8), at least two vehicle axles (I, II, III), and at least one wheel (R1, R1', R2, R2', R3, R3') fitted on each vehicle axle (I, II, III);
detection means (S1, S1', S2, S2', S3, S3');
a control device designed for carrying out the method according to one of the preceding claims.

10. Computer program product with program code for carrying out the method according to one of Claims 1 to 8 when the program code is executed on a computer.

## Revendications

1. Procédé de commande d'une fonction de dynamique de conduite d'un engin de travail ayant au moins deux essieux de véhicule (I, II, III), une vitesse de rotation actuelle d'au moins une roue (R1, R1', R2, R2', R3, R3') étant enregistrée et fournie à un dispositif de commande pour une comparaison avec une vitesse de rotation admissible de la même roue (R1, R1', R2, R2', R3, R3') et un patinage de roue étant calculé à partir de celle-ci, un signal de commande étant émis par le dispositif de commande pour bloquer au moins un différentiel (4, 5, 6, 7, 8) lorsque le patinage de roue prend une valeur non admissible, un signal de commande pour le déblocage étant émis périodiquement pour le différentiel (4, 5, 6, 7, 8) concerné et un nouveau réglage des vitesses de rotation des roues étant effectué, un signal de commande pour le blocage du différentiel (4, 5, 6, 7, 8) concerné étant à nouveau émis si le patinage de roue continue à prendre une valeur non admissible, **caractérisé en ce que**, en utilisant des moyens de détection (S1, S1', S2, S2', S3, S3'), une distance parcourue est enregistrée, le long de laquelle la valeur du patinage de roue d'au moins une roue (R1, R1', R2, R2', R3, R3') présentait une valeur non admissible.

2. Procédé selon la revendication 1, **caractérisé en ce qu'**en plus de la distance parcourue, sa position est également déterminée, un signal de commande pour bloquer le différentiel respectif (4, 5, 6, 7, 8) étant émis de manière prédictive pour au moins un autre différentiel respectif (4, 5, 6, 7, 8) avant qu'une autre roue (R1, R1', R2, R2', R3, R3') ne parcoure la distance.

3. Procédé selon la revendication 2, **caractérisé en ce qu'**un signal de commande pour le déblocage est émis périodiquement pour ledit au moins un autre différentiel (4, 5, 6, 7, 8) et un nouveau réglage des vitesses de rotation des roues est effectué, un signal de commande pour le blocage du différentiel concerné (4, 5, 6, 7, 8) étant à nouveau émis si le patinage de roue continue à prendre une valeur non admissible.

4. Procédé selon la revendication 3, **caractérisé en ce qu'**une valeur résultant d'une durée de blocage dudit au moins un différentiel bloqué (4, 5, 6, 7, 8) est ajustée en tenant compte d'autres paramètres de dynamique de conduite (X).

5. Procédé selon l'une des revendications 2 à 4, **caractérisé en ce qu'**un signal de commande de déblocage est émis en priorité pour le différentiel (4, 5, 6, 7, 8) dont le déblocage permet de s'attendre avec une grande probabilité à une valeur admissible pour le patinage de roue, un signal de commande de déblocage du différentiel (4, 5, 6, 7, 8) concerné étant émis une nouvelle fois si le patinage de roue présente toujours une valeur non admissible.

6. Procédé selon la revendication 5, **caractérisé en ce que** l'émission périodique du signal de commande de déverrouillage des différentiels restants (4, 5, 6, 7, 8) est suspendue si une valeur non admissible a été préalablement déterminée pour le patinage de roue.

7. Procédé selon l'une des revendications précédentes, **caractérisé en ce qu'**une vitesse de rotation de roue d'au moins une autre roue (R1, R1', R2, R2', R3, R3') est utilisée par les moyens de détection (S1, S1', S2, S2', S3, S3').

8. Procédé selon l'une des revendications précédentes, **caractérisé en ce qu'**un signal est utilisé par les moyens de détection (S1, S1', S2, S2', S3, S3') pour déterminer des données de position.

9. Engin de travail, présentant
- une chaîne cinématique (1) avec un élément d'entraînement (2), au moins un différentiel verrouillable (4, 5, 6, 7, 8), au moins deux essieux de véhicule (I, II, III) et au moins une roue (R1, R1', R2, R2', R3, R3') montée sur chaque essieu de véhicule (I, II, III) ;
- des moyens de détection (S1, S1', S2, S2', S3, S3') ;
- un dispositif de commande agencé pour mettre en œuvre le procédé selon l'une des revendications précédentes.

10. Produit programme d'ordinateur comprenant un code de programme pour la mise en œuvre du procédé selon l'une des revendications 1 à 8, lorsque ledit code de programme est exécuté sur un ordinateur.
